# EUROPEAN PATENT SPECIFICATION

(11) **EP 2 288 019 B1**
(45) Date of publication and mention of the grant of the patent: **25.10.2017**
(21) Application number: 09766363.7
(22) Date of filing: 18.05.2009
(51) Int. Cl.: H02P 29/02, H02H 7/09, H02M 1/32, B65G 43/00

(54) **MOTOR CONTROL APPARATUS**
MOTORSTEUERUNGSVORRICHTUNG
APPAREIL DE COMMANDE DE MOTEUR

(30) Priority: 19.06.2008 JP 2008159971
(43) Date of publication of application: 23.02.2011
(73) Proprietor: Panasonic Intellectual Property Management Co., Ltd., Osaka-shi, Osaka 540-6207 (JP)
(72) Inventor: DOI, Satoru, Osaka 540-6207 (JP); YOSHIMURA, Shin'ichi, Osaka 540-6207 (JP); OZAKI, Hiroshi, Osaka 540-6207 (JP); KISHIBE, Taro, Osaka 540-6207 (JP)
(74) Representative: Schwabe - Sandmair - Marx
(86) International application number: PCT/JP2009/002168
(87) International publication number: WO 2009/153915

(56) References cited:
- EP-A2- 1 811 642
- JP-A- 5 091 656
- JP-A- 61 072 307
- JP-A- 2001 037 239
- JP-A- 2004 125 209
- JP-A- 2005 249 293
- JP-A- 2006 142 470
- JP-A- 2006 226 993
- JP-A- 2006 254 565
- JP-A- 2007 252 134
- JP-A- 2007 255 531
- US-A1- 2007 080 977

## Description

### Technical Field

The present invention relates to a motor control device that can stop the motor safely in the event that the internal power source produces an abnormal voltage.

### Background Art

A conventional motor control device, which drives a brushless motor for controlling a speed or a position, includes a protective function that monitors a power-supply voltage supplied from the outside and stops the motor when necessary. To be more specific, when the monitored power-supply voltage exceeds or falls short of a threshold, the device detects it as an error, and then stops the motor for the safety purpose.

The power supply device including the protective function about the power-supply voltage has been proposed in, e.g. Patent Literature 1. The power supply device disclosed in Patent Literature 1 comprises the following structural elements:
a printed wired board on which multiple on-board power supplies are mounted; and
a power-supply monitoring circuit including a monitoring section, a controlling section, and a threshold setting section formed on the printed wired board.
The monitoring section monitors variations in the supplied power, and transmits a control signal when the power supply voltage exceeds or falls short of the threshold set by the threshold setting section. The controlling section receives the control signal, and then connects each one of remote control terminals of respective on-board power supplies in operation to the negative voltage side of the power supply, and turns off the respective on-board power supplies simultaneously. The conventional power supply device thus can prevent adversary affect to the secondary circuit, because the foregoing structure allows avoiding dispersion in the times of turn-on or turn-off of multiple on-board power supplies in the event of a change in a supplied voltage.

However, the foregoing conventional protective function against an abnormal voltage eventually cuts off the external power supply in the event of detecting an abnormal voltage, e.g. all the power supplies of the motor control device are cut off, and thus the circuits irrelevant to the abnormality of the external power supply are obliged to stop operating.

For instance, the motor control device discussed above produces multiple voltages for the internal circuits such as an internal control circuit, so that a power supply for a motor driving circuit, a power supply for a microprocessor, a power supply for an communication circuit to the outside are separated from each other. Although the power supplies are separated from each other as discussed above, the conventional method cuts off the external power supply common to the foregoing respective power supplies in the event that the voltage of the motor driving circuit exceeds the threshold due to a change in the voltage externally supplied. The power supplies for the microprocessor and the communication circuit must be thus turned off, so that a user cannot analyze what causes the error, or trace the record.

### Related Art Literature

Patent Literature 1: Unexamined Japanese Patent Application Publication No. 2002 - 034149

Documents JP2004-125209 A, EP1811642 A2, US2007/0080977 A1 and JP2005-249293 A all disclose motor control devices with power circuit sections having circuits for overvoltage protection.

### Disclosure of Invention

The present invention aims to provide a motor control device according to claim 1 which safely controls the motor even when an abnormal voltage to be supplied to internal circuits is produced.

The motor control device discussed above supplies the voltage for internal use through the protective circuit section to a specified control section included in the control circuit section.

In the event of detecting an abnormal voltage in the voltage for internal use, the foregoing structure allows the protective circuit section to halt a supply of the abnormal voltage only to the specified control section related to safety. The specified control section can be thus prevented from being broken down caused by the abnormal voltage. On top of that, an assignment of a motor driving circuit to this specified control section allows preventing the motor from operating abnormally caused by the abnormal voltage. As a result, the motor can be assured to operate safely.

### Brief Description of Drawings

Fig. 1 shows a structure of a motor control device in accordance with a first embodiment of the present invention.
Fig. 2 shows a structure of a motor control device in accordance with an example.

### Detailed Description of Preferred Embodiments

An embodiment of the present invention and an example are demonstrated hereinafter with reference to the accompanying drawings.

### Exemplary Embodiment 1

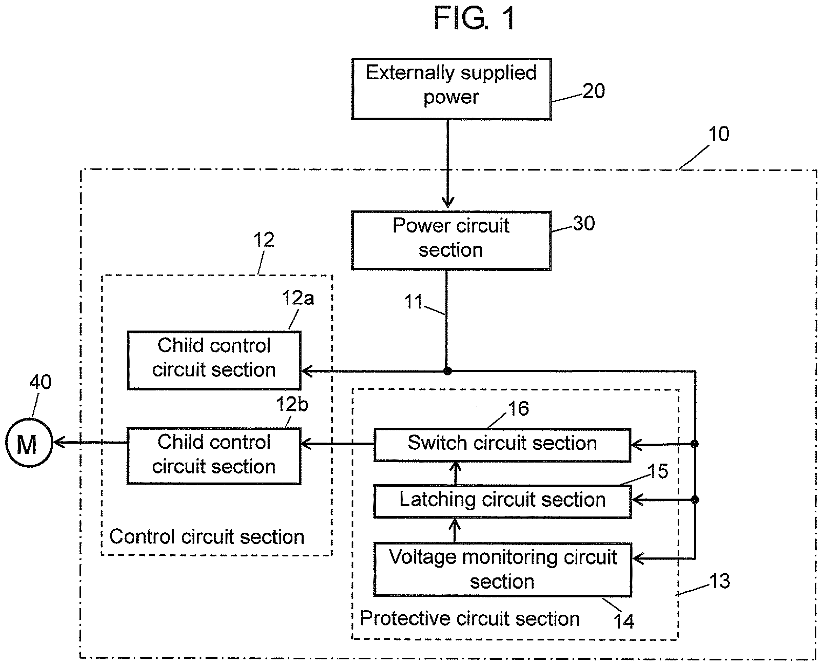

Fig. 1 shows a structure of a motor control device in accordance with the first embodiment of the present invention. In Fig. 1, motor control device 10 receives a voltage externally supplied from externally supplied power 20, thereby generating voltage 11 in power circuit section 30 for internal use. Externally supplied power 20 can be either one of AC power or DC power. In the case of using the AC power, a rectifying circuit converts the AC power into DC power.

Power circuit section 30 is formed of components generally used for a power supply circuit such as a transformer and an IC for power supply. Voltage 11 for internal use is used for operating control circuit section 12.

Motor control device 10 thus includes various control circuits that form control circuit section 12 for driving and controlling motor 40. These control circuits are driven by voltage 11 for internal use as a power supply.

Motor control device 10 further includes protective circuit section 13 as protective function in order to prevent the control circuit from being broken and to halt motor 40 safely in the event of occurring an abnormal voltage in voltage 11 for internal use. Embodying this protective function discussed above, protective circuit section 13 monitors voltage 11 for detecting an abnormality. When an abnormal voltage is detected, protective circuit section 13 cuts off a supply of voltage 11. In this first embodiment, protective circuit section 13 is provided to protect control circuit section 12 of which various circuits share voltage 11 for internal use as their power supplies.

As shown in Fig. 1, control circuit section 12 is split into child control circuit section 12a and another child control circuit section 12b. Voltage 11 for internal use is directly supplied to child control circuit section 12a designated as a non-specified control section. On the other hand, voltage 11 is supplied via protective circuit section 13 to child control circuit section 12b designated as a specified control section. Control circuit section 12 thus includes child control circuit section 12a and child control section 12b, and both of them share voltage 11 as a power supply. In this embodiment, child control section 12b designated as the specified control section is formed of a circuit relevant to safety.

Motor control device 10 thus supplies voltage 11 directly, or not via protective circuit section 13, to child control circuit section 12a having no circuit relevant to the safety while it supplies voltage 11 via protective circuit section 13 to child control circuit section 12b having the circuit relevant to the safety.

In the event of an abnormality in the power supply voltage, the structure discussed above allows protective circuit section 13 to halt the operation only of the circuit relevant to the safety. Child control circuit section 12b can be thus prevented from breakdown caused by the abnormal voltage, and motor 40 also can be prevented from operating abnormally due to this abnormal voltage. As a result, the safety for users can be secured.

The first embodiment is further detailed hereinafter. As shown in Fig. 1, protective circuit section 13 includes voltage monitoring circuit section 14, latching circuit section 15, and switch circuit section 16. First, voltage monitoring circuit section 14 compares voltage 11 for internal use with a threshold, and outputs a detection signal when voltage 11 exceeds the threshold. In other words, voltage monitoring circuit section 14 monitors voltage 11 whether or not voltage 11 exceeds the predetermined voltage value, i.e. the threshold, and then voltage monitoring circuit section 14 compares voltage 11 for internal use with the threshold, and outputs the detection signal in the event that voltage 11 exceeds the threshold. The threshold is provided in order to determine whether or not voltage 11 is abnormal.

Voltage monitoring circuit section 14 is formed of, e.g. a comparator and a bleeder resistor, or an IC specializing in monitoring a voltage. The threshold for determining an abnormal voltage can have an upper limit and a lower limit so that voltage monitoring circuit section 14 can deal with both of too high voltage 11 and too low voltage 11.

Latching circuit section 15 latches and holds the detection signal supplied from voltage monitoring circuit section 14. To be more specific, latching circuit section 15 takes the detection signal in, stores it, and holds it. For instance, latching circuit section 15 keeps storing the detection signal until a latch releasing signal, e.g. a reset signal, is given to latching circuit section 15.

Switch circuit section 16 connects with voltage 11 for internal use at a first end, and connects with child control circuit section 12b at a second end, so that it can cut off the conduction between the first end and the second end of switch circuit section 16 based on the detection signal held by latching circuit section 15. In other words, a first end of an on-off switch in switch circuit section 16 is coupled to voltage 11, and a second end thereof is coupled to an input terminal of the power supply for child control circuit section 12b. The on-off of switch circuit section 16 is controlled by voltage monitoring circuit section 14 such that switch circuit section 16 can cut off the conduction between the first end and the second end of switch circuit section 16 based on the detection signal supplied from voltage monitoring circuit 14. To be more specific, when voltage 11 exceeds the threshold, voltage monitoring circuit section 14 outputs a detection signal for operating the switch in switch circuit section 16, thereby turning off the switch. As a result, a supply of voltage 11 to child control circuit section 12b is cut off.

The foregoing mechanism thus allows discontinuing the supply of voltage 11 only to child control circuit section 12b, while child control circuit section 12a keeps operating. The reason why only one of two control circuit sections 12a and 12b is cut off from the power supply is, for instance, to secure the safe operation of the motor such as the switching of a power device. In other words, assume that the specified child control circuit section 12b includes a motor driving circuit that drives motor 40, and then the foregoing mechanism can positively halt motor 40 and increase the safety. To be more specific, the motor driving circuit is placed in child control circuit section 12b, and the motor driving circuit generates a driving current to drive motor 40 by using voltage 11 supplied via protective circuit section 13.

It is recommended that child control circuit section 12a be designed with some margin so that an abnormal voltage cannot break child control circuit section 12a, which then can act advantageously as a circuit for informing e.g. an occurrence of the abnormal voltage to a user interface. In other words, it is preferable that child control circuit section 12a designated as the non-specified control section is formed of a circuit operable at a higher voltage than voltage 11.

The circuit for informing the user interface of the abnormal voltage can be a serial communication circuit or an open collector circuit. For instance, assume that a DC-DC converter generates DC 5V from DC 12V as voltage 11 for internal use, then child control circuit section 12a can be designed as a serial communication circuit that can operate as high as at DC 12V. In the worst case, when the DC-DC converter is shorted and broken, and DC 5V rises to DC 12V, the forgoing structure allows the motor to stop without fail, and the abnormality can be informed to the outside. In this instance, the DC-DC converter corresponds to power circuit section 30. It is thus preferable that child control circuit section 12a is designed such that it can operate at voltages as high as the voltage externally supplied to power circuit section 30.

Employing a control circuit, which withstands a high voltage, for child control circuit section 12a allows protective circuit section 13 to protect child control circuit section 12b from breakdown, so that the safety can be secured. On top of that, this structure prevents child control circuit section 12a from breakdown caused by an abnormal voltage. As a result, this structure allows an analyzing circuit or a communication circuit provided in child control circuit section 12a to inform the outside of an abnormality, and the safety and usability can be further improved.

As discussed above, protective circuit section 13 includes latching circuit section 15. Assume that although voltage monitoring circuit section 14 cuts off the voltage, the voltage unexpectedly restores itself to a normal range. In such a case, the motor possibly starts rotating abruptly, which puts the user in danger. To overcome such danger, latching circuit section 15 is employed for latching an output from voltage monitoring circuit section 14, so that information that the abnormality has occurred can be retained. This mechanism prohibits the motor from being driven until the user operates the motor even when the voltage restores itself to the normal range. In this case, latching circuit section 15 needs to use a voltage, which should not be cut off at the abnormality, as a power supply.

Instead of employing the latching circuit section 15 discussed above, the detection signal supplied from voltage monitoring circuit section 14 can be directly transmitted to switch circuit section 16. In this case, an abnormal voltage can be cut off, so that the safety can be secured; however, the presence of latching circuit section 15 as discussed above will further increase the safety.

The structure of motor control device 10 in accordance with the first embodiment proves that the operation only of the circuit relevant to the safety can be halted in the event of detecting an abnormality in voltage to be used as a power supply. The structure thus not only allows preventing the abnormal voltage from being kept applying to the internal components, but also allows the user to keep using the functions of the circuits normally operating, such as the circuit for analyzing why the abnormal voltage occurs.

### Example:

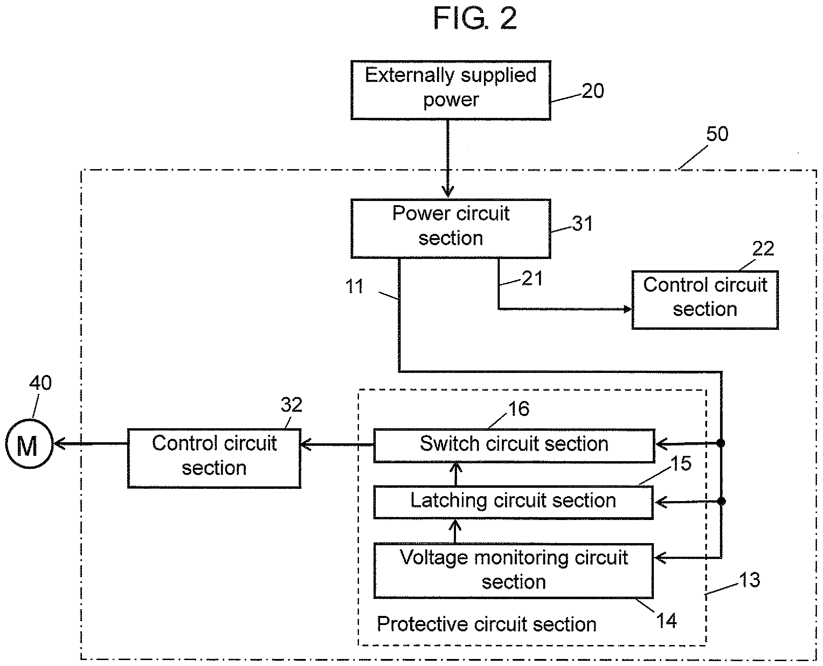

Fig. 2 shows a structure of a motor control device. Structural elements similar to those used in the first embodiment and shown in Fig. 1 have the same reference signs, and the detailed descriptions thereof are omitted here. This example differs from the first embodiment in the structure of power circuit section 31, which generates multiple and independent voltages 11 and 21 for internal use. To be more specific, as shown in Fig. 2, motor control device 50 has power circuit section 31 generate voltages 11 and 21 for internal use by using a voltage supplied from externally supplied power 20. Voltage 11 is used as a power supply for operating control circuit section 32, and voltage 21 is used as a power supply for operating control circuit section 22.

Motor control device 50 further includes protective circuit section 13 as the first embodiment does. When at least voltage 11 shows abnormality, this protective circuit section 13 prevents the control circuit from breakdown, and also safely halts motor 40.

In this example, as shown in Fig. 2, the control circuit section is split into control circuit section 22 and control circuit section 32. The first one is assigned to a non-specified control section, to which voltage 21 for internal use is supplied directly. The second one is assigned to a specified control section, to which voltage 11 is supplied via protective circuit 13. Motor control device 50 thus includes control circuit sections 22 and 32, and power circuit section 31 supplies the voltages different from each other to control circuit sections 22 and 32 respectively. In this example, the specified control section, i.e. control circuit section 32 is formed of a safety-related circuit. The non-specified control section, i.e. control circuit section 22 preferably works at a higher voltage than voltage 21.

Motor control device 50 thus directly supplies voltage 21 for internal use, namely not via protective circuit section 13, to control circuit section 22 which has no safety-related circuit. On the other hand, motor control device 50 supplies voltage 11 for internal use, via protective circuit section 13, to control circuit section 32 which has the safety-related circuit.

In the event of detecting an abnormality in voltage to be used as a power supply, motor control device 50 in accordance with this example thus halts the operation only of the safety-related circuit. On top of that, the foregoing structure not only prevents the abnormal voltage from being kept applying to the internal components, but also allows the user to keep using the functions of the circuits normally operating, such as the circuit for analyzing why the abnormal voltage occurs.

The motor control device of this example, as discussed above, comprises the following structural elements:
a power circuit section for producing a voltage for internal use from a voltage supplied externally;
a control circuit section to be operated by the voltage for internal use; and
a protective circuit section for monitoring the voltage for internal use and cutting off a supply of the voltage for internal use in the event of detecting an abnormality in the voltage for internal use.

The motor control device discussed above supplies the voltage for internal use through the protective circuit section to a specified control section included in the control circuit section. In the event of detecting an abnormality in the internal power supply, the foregoing structure allows halting operation of only the specified control section relevant to the safety. On top of that, the structure keeps supplying the voltage to the control circuit irrelevant to the safety. The control circuit irrelevant to the safety is preferably designed to withstand a high voltage, so that it can be used as a circuit for analyzing why the abnormality occurs. In the event of detecting an abnormality in the power supply voltage, the present invention thus not only secures the safety of the user, but also allows the user to analyze errors occurring after the abnormality. As a result, the present example can provide a motor control device which increases the safety.

The first embodiment recites that power circuit section 30 generates one voltage for internal use, however; power circuit section 30 can generates multiple voltages for internal use. For instance, power circuit section 30 outputs DC 5V and DC 12V to be used internally, and DC 5V can be assigned to the specified control section, or DC 5V and DC 12V can be assigned to the specified control sections respectively. This example recites that power circuit section 31 generates two voltages for internal use; however, it can generate another voltage for internal use. For instance, power circuit section 31 outputs DC 5V assigned to both of the specified and non-specified control sections, and it also outputs DC 12V to be assigned to the non-specified control section, or it can output two DC 5Vs and two DC 12Vs, and they can be assigned to the specified and the non-specified control sections respectively.

### Industrial Applicability

A motor control device of the present invention can cut off the power supply safely when an abnormality is detected in a voltage for internal use, so that the motor control device is useful for industrial application such as a conveying device or a component manufacturing device.

### Description of Reference Signs

10, 50 motor control device
11, 21 voltage for internal use
12, 22, 32 control circuit section
12a, 12b child control circuit section
13 protective circuit section
14 voltage monitoring circuit section
15 latching circuit section
16 switch circuit section
20 externally supplied power
30, 31 power circuit section
40 motor

## Claims

1. A motor control device (10) which has circuits for controlling and driving a motor (40) comprising:
a power circuit section (30) adapted to generate a voltage (11) for internal use from a voltage (20) externally supplied;
a control circuit section (12) operating by using the voltage (11) for internal use as a power supply; and
a protective circuit section (13) for monitoring the voltage (11) for internal use, and cutting off the voltage (11) for internal use in an event of detecting an abnormality in the voltage (11) for internal use,
wherein the voltage (11) for internal use is supplied via the protective circuit section (13) to a specified control section (12b) included in the control circuit section (12),
wherein the control circuit section (12) is divided into a non-specified control section (12a) to which the voltage (11) for internal use is directly supplied, and the specified control section (12b) to which the voltage (11) for internal use is supplied via the protective circuit section (13), and
wherein the voltage (11) for internal use is supplied in common both to the non-specified control section (12a) and the protective circuit section (13),
the protective circuit section (13) including:
a voltage monitoring circuit section (14) which compares the voltage (11) for internal use with a threshold and outputs a detection signal when the voltage (11) for internal use exceeds the threshold, the threshold having an upper limit and a lower limit so that the voltage monitoring circuit section (14) is configured to deal with both of too high voltage (11) and too low voltage (11);
a latching circuit section (15) which latches and retains the detection signal; and
a switch circuit section (16) which connects with the voltage (11) for internal use at a first end and connects with the specified control section (12b) at a second end, and cuts off conductivity between the first end and the second end of the switch circuit section (16) based on the detection signal retained by the latching circuit section (15),
whereby a supply of the voltage (11) for internal use is discontinued only to the specified control section (12b) while the non-specified control section (12a) keeps operating;
wherein the non-specified control circuit (12a) is formed of a circuit operable at a higher voltage than the voltage (11) for internal use and designed to operate at voltages as high as the voltage (20) externally supplied to the power circuit section (30);
wherein the non-specified control circuit (12a) is adapted to inform an occurrence of abnormal voltage of the voltage (11) for internal use to a user interface.

2. The motor control device (10) of claim 1, wherein the specified control section (12b) includes a motor driving circuit adapted to drive the motor (40).

3. The motor control device (10) of claim 2, wherein the motor driving circuit generates a driving current adapted to drive the motor (40) from the voltage (11) for internal use supplied via the protective circuit section (13).

4. The motor control device (10) of claim 1, wherein the non-specified control section (12a) has at least one of an analyzing circuit and a communication circuit.

5. The motor control device (10) of claim 4, wherein the non-specified control section (12a) allows the analyzing circuit or the communication circuit provided to inform the occurrence of abnormal voltage to an outside.

6. The motor control device (10) of claim 1, wherein the latching circuit (15) uses a voltage as a power supply, which is not cut off at the occurrence of abnormal voltage.

## Patentansprüche

1. Motorsteuervorrichtung (10), die Schaltungen zum Steuern und Antreiben eines Motors (40) hat, umfassend:
einen Stromkreisbereich (30), eingerichtet, eine Spannung (11) für eine interne Verwendung von einer extern zugeführten Spannung (20) zu erzeugen;
einen Steuerschaltungsbereich (12), in Betrieb durch das Verwenden der Spannung (11) für eine interne Verwendung als eine Stromversorgung; und
ein Schutzschaltungsbereich (13) zum Überwachen der Spannung (11) für eine interne Verwendung und Unterbrechen der Spannung (11) für eine interne Verwendung, in einem Fall des Erkennens einer Anomalie in der Spannung (11) für eine interne Verwendung,
wobei die Spannung (11) für eine interne Verwendung über den Schutzschaltungsbereich (13) einem spezifizierten Steuerbereich (12b), der im Steuerschaltungsbereich (12) umfasst ist, zugeführt wird,
wobei der Steuerschaltungsbereich (12) in einen nicht-spezifizierten Steuerbereich (12a), dem die Spannung (11) für eine interne Verwendung direkt zugeführt wird, und den spezifizierten Steuerbereich (12b) aufgeteilt ist, dem die Spannung (11) für eine interne Verwendung über den Schutzschaltungsbereich (13) zugeführt wird, und
wobei die Spannung (11) für eine interne Verwendung gleichmäßig dem nicht spezifizierten Steuerbereich (12a) und dem Schutzschaltungsbereich (13) zugeführt wird,
wobei der Schutzschaltungsbereich (13) Folgendes umfasst:
einen Spannungsüberwachungsschaltungsbereich (14), der die Spannung (11) für eine interne Verwendung mit einem Schwellenwert vergleicht und ein Detektionssignal ausgibt, wenn die Spannung (11) für eine interne Verwendung den Schwellenwert übersteigt, wobei der Schwellenwert eine Obergrenze und eine Untergrenze hat, sodass der Spannungsüberwachungsschaltungsbereich (14) konfiguriert ist, eine zu hohe Spannung (11) und eine zu niedrige Spannung (11) zu bewältigen;
einen Verriegelungsschaltungsbereich (15), der das Detektionssignal einfängt und zurückbehält; und
einen Schaltkreisbereich (16), der sich mit der Spannung (11) für eine interne Verwendung an einem ersten Ende verbindet und sich mit dem spezifizierten Steuerbereich (12b) an einem zweiten Ende verbindet und die Leitfähigkeit zwischen dem ersten Ende und dem zweiten Ende des Schaltkreisbereichs (16) beruhend auf dem durch das Verriegelungsschaltungsbereich (15) zurückbehaltenen Detektionssignal unterbricht,
wodurch eine Zuführung der Spannung (11) für eine interne Verwendung nur zum spezifizierten Steuerbereich (12b) unterbrochen wird, während der nicht spezifizierte Steuerbereich (12a) weiter in Betrieb bleibt;
wobei die nicht spezifizierte Steuerschaltung (12a) aus einer Schaltung gebildet ist, die bei einer höheren Spannung als die Spannung (11) für eine interne Verwendung betreibbar ist und ausgerichtet ist, bei Spannungen in Betrieb zu sein, die so hoch sind wie die extern dem Stromkreisbereich (30) zugeführte Spannung (20);
wobei die nicht spezifizierte Steuerschaltung (12a) eingerichtet ist, einer Benutzerschnittstelle über ein Auftreten einer anormalen Spannung der Spannung (11) für eine interne Verwendung zu berichten.

2. Motorsteuervorrichtung (10) nach Anspruch 1, wobei der spezifizierte Steuerbereich (12b) eine Motorantriebsschaltung umfasst, die eingerichtet ist, den Motor (40) anzutreiben.

3. Motorsteuervorrichtung (10) nach Anspruch 2, wobei die Motorantriebsschaltung einen Antriebsstrom erzeugt, der eingerichtet ist, den Motor (40) von der Spannung (11) für eine interne Verwendung, die über den Schutzschaltungsbereich (13) zugeführt wird, anzutreiben.

4. Motorsteuervorrichtung (10) nach Anspruch 1, wobei der nicht spezifizierte Steuerbereich (12a) mindestens eine einer Auswertschaltung und einer Kommunikationsschaltung aufweist.

5. Motorsteuervorrichtung (10) nach Anspruch 4, wobei der nicht spezifizierte Steuerbereich (12a) es der bereitgestellten Auswertschaltung oder Kommunikationsschaltung ermöglicht, einem Äußeren von dem Auftreten einer anormalen Spannung zu berichten.

6. Motorsteuervorrichtung (10) nach Anspruch 1, wobei die Verriegelungsschaltung (15) eine Spannung als eine Stromversorgung verwendet, die beim Auftreten einer anormalen Spannung nicht unterbrochen wird.

## Revendications

1. Dispositif de commande de moteur (10) qui a des circuits destinés à commander et entraîner un moteur (40) comprenant :
une section de circuit d'alimentation (30) conçue pour générer une tension (11) en vue d'un usage interne à partir d'une tension (20) provenant de l'extérieur ;
une section de circuit de commande (12) fonctionnant en utilisant la tension (11) en vue d'un usage interne en tant qu'alimentation électrique ; et
une section de circuit de protection (13) destinée à surveiller la tension (11) en vue d'un usage interne, et à couper la tension (11) en vue d'un usage interne en cas de détection d'une anomalie de la tension (11) en vue d'un usage interne,
la tension (11) en vue d'un usage interne étant fournie par le biais de la section de circuit de protection (13) à une section de commande spécifiée (12b) comprise dans la section de circuit de commande (12),
la section de circuit de commande (12) étant divisée en une section de commande non spécifiée (12a) à laquelle la tension (11) en vue d'un usage interne est fournie directement, et la section de commande spécifiée (12b) à laquelle la tension (11) en vue d'un usage interne est fournie par le biais de la section de circuit de protection (13), et
la tension (11) en vue d'un usage interne étant fournie conjointement à la fois à la section de commande non spécifiée (12a) et à la section de circuit de protection (13),
la section de circuit de protection (13) comprenant :
une section de circuit de surveillance de la tension (14) qui compare la tension (11) en vue d'un usage interne à un seuil et émet un signal de détection lorsque la tension (11) en vue d'un usage interne dépasse le seuil, le seuil ayant une limite supérieure et une limite inférieure de manière à ce que la section de circuit de surveillance de la tension (14) soit conçue pour traiter à la fois d'une tension trop élevée (11) et d'une tension trop basse (11) ;
une section de circuit de blocage (15) qui bloque et retient le signal de détection ; et
une section de circuit de commutation (16) qui se connecte à la tension (11) en vue d'un usage interne à une première extrémité et se connecte à la section de commande spécifiée (12b) à une deuxième extrémité, et coupe la conductivité entre la première extrémité et la deuxième extrémité de la section de circuit de commutation (16) en fonction du signal de détection retenu par la section de circuit de blocage (15),
une alimentation en tension (11) en vue d'un usage interne étant interrompue seulement à la section de commande spécifiée (12b) tandis que la section de commande non spécifiée (12a) continue à fonctionner ;
le circuit de commande non spécifié (12a) étant formé d'un circuit fonctionnant à une tension plus élevée que la tension (11) en vue d'un usage interne et étant conçu pour fonctionner à des tensions aussi élevées que la tension (20) fournie de l'extérieur à la section de circuit d'alimentation (30) ;
le circuit de commande non spécifié (12a) étant conçu pour informer d'une survenue de tension anormale de la tension (11) en vue d'un usage interne à une interface utilisateur.

2. Dispositif de commande de moteur (10) selon la revendication 1, dans lequel la section de commande spécifiée (12b) comprend un circuit d'entraînement de moteur conçu pour entraîner le moteur (40).

3. Dispositif de commande de moteur (10) selon la revendication 2, dans lequel le circuit d'entraînement de moteur génère un courant d'entraînement conçu pour entraîner le moteur (40) à partir de la tension (11) en vue d'un usage interne fournie par le biais de la section de circuit de protection (13).

4. Dispositif de commande de moteur (10) selon la revendication 1, dans lequel la section de commande non spécifiée (12a) présente le circuit d'analyse et/ou le circuit de communication.

5. Dispositif de commande de moteur (10) selon la revendication 4, dans lequel la commande de section non spécifiée (12a) permet au circuit d'analyse ou au circuit de communication fourni d'informer de la survenue d'une tension anormale vers un extérieur.

6. Dispositif de commande de moteur (10) selon la revendication 1, dans lequel le circuit de blocage (15) utilise une tension comme alimentation électrique, qui n'est pas coupée lors de la survenue d'une tension anormale.
